# EUROPEAN PATENT SPECIFICATION

(11) **EP 3 623 660 B1**
(45) Date of publication and mention of the grant of the patent: **22.06.2022**
(21) Application number: 19195052.6
(22) Date of filing: 03.09.2019
(51) Int. Cl.: F16H 55/36

(54) **A PULLEY COMPRISING AN INSERT**
RIEMENSCHEIBE UMFASSENDE EINEN EINSATZ
UNE POULIE COMPRENANT UN INSERT

(30) Priority: 13.09.2018 GB 201814925
(43) Date of publication of application: 18.03.2020
(73) Proprietor: Ford Global Technologies, LLC, Dearborn, MI 48126 (US)
(72) Inventor: WADE, Robert, Plymouth, Michigan 48170 (US); KWOK, Ada, Campbellfield, Victoria 3061 (AU); FISK, Thomas, London, Bromley-by-Bow E3 3GR (GB); MOORES, Jason, Billericay, Essex CM11 2UN (GB)
(74) Representative: Haseltine Lake Kempner LLP

(56) References cited:
- WO-A1-2015/191502
- JP-A- 2002 364 667
- JP-A- 2004 232 778
- JP-A- 2005 201 433
- JP-Y2- 2 563 147
- US-B2- 8 397 602

## Description

The present invention relates to a front end accessory drive (FEAD) pulley comprising an insert for noise reduction, for example a crankshaft vibration damper insert. Particularly, although not exclusively, the invention relates to a noise reduction insert for a pulley (e.g. a pulley on an internal combustion engine or electric motor).

### Background

During typical engine operation the full load of the engine can be carried by parts of an internal combustion engine (ICE) or electric motor, e.g. the front end accessory drive (FEAD) as motion from the reciprocating piston engines is imparted to part of the FEAD. For example, motion from the reciprocating piston engines may be imparted into at least one of: an AC compressor pulley, a water pump pulley, a crankshaft (drive) pulley (e.g. a pulley coupled to a crankshaft), an alternator pulley, and a power steering pump pulley. In one example, the full load of the engine may be carried by the engine crankshaft as motion from the reciprocating piston engines is imparted to the crankshaft.

In order to control noise a noise reduction insert can be provided at one end of a pulley, e.g. a FEAD pulley, for example integrated into the FEAD pulley, as FEAD pulleys are parts of an ICE that are susceptible to high levels of vibration and therefore susceptible to emitting high levels of noise. For example, a FEAD pulley or vibration damper can act to transmit vibrations of the crankshaft that become airborne noise. A noise, vibration and harshness cover (NVH), or insert, may be provided within a FEAD pulley (e.g. a crankshaft pulley) or vibration damper (e.g. a crankshaft vibration damper) to mitigate noise, e.g. resulting from vibration of the FEAD pulley itself.

WO 2015/191502 discloses a torsional vibration damper with an interlocked isolator and it is considered to comprise an insert, a first member and a second member.

JP 2004 232778 discloses an accessory driving pulley.

### Statements of Invention

According to a first arrangement of the invention there is provided a front end accessory drive pulley comprising an insert, for example a noise reduction insert, as defined by claim 1. The insert comprises: a first member insertable into a pulley such that the first member is rotatable within the pulley, the first member comprising a cavity for receipt of a second member; and a second member insertable into the cavity of the first member such that, when the first member is inserted into a pulley and the second member is inserted into the cavity of the first member, the second member prevents rotation of the first member relative to the pulley. Herein by 'pulley' it is also meant 'vibration damper', and hence according to the first arrangement there is provided an insert, e.g. a noise reduction insert, for a vibration damper, e.g. a crankshaft vibration damper.

The insert may be a noise reduction insert and is for a pulley. In one example, the noise reduction insert may be for a pulley on an ICE or electric motor. In one example, the noise reduction insert may be for a FEAD pulley. For example, the noise reduction insert may be for an AC compressor pulley, a water pump pulley, a crankshaft (drive) pulley (e.g. a pulley coupled to a crankshaft), an alternator pulley, or a power steering pump pulley. In one example, the noise reduction insert may be for a crankshaft vibration damper, e.g. a crankshaft vibration damping insert.

As will be described further below the invention provides a two-piece, or two-component, insert, or cover, insertable into a pulley such that the second piece prevents relative movement of the first piece. As will also be described below the first member is rotatable within the pulley, and rotatable to a position in which the first member is retained within the pulley. Specifically, the first member is rotatable to secure itself within the pulley. More specifically, the first member is rotatable to lock itself above at least one spoke of the pulley, e.g. the first member is rotatable into a locked position. The second member is then insertable about the first member so as to prevent further rotation. Therefore, the second member may be insertable about the first member so as to lock the first member in place. This may prevent the first member from rotating (in an opposite direction) out of its locked position above a spoke of the pulley's spokes.

The second member may comprise a second member limb insertable within the cavity, such that, when first member is inserted into a pulley and the second member is inserted into the cavity of the first member, the second member limb may be inserted into the cavity of the first member, and wherein engagement between the first member and second member limb may prevent rotation of the first member relative to the pulley.

The first member comprises a first member body and the cavity may be a gap in the first member body. The body may be round, cylindrical or barrel-shaped. For example, the body may have a uniform cross section. At least one cross section of the body may be cylindrical. The cavity may represent any hole or opening suitable for receipt of any part of the second member. For example, the body may comprise an upper surface and the cavity may be a discontinuity in the upper surface, such as a groove or recess. Alternatively, the body may comprise a peripheral, or lateral, surface and the cavity may represent a discontinuity, e.g. a groove or recess, in the peripheral surface. In this way, the cavity may be a concave portion of the first member body.

The first member comprises a first member limb which may be a protrusion away from the body. Such a configuration provides a protruding limb or leg with which the first member engages the pulley. Engagement between the first member and the pulley may be between a surface of the pulley and a surface of the first member. Alternatively, engagement between the first member and the pulley may be between at least a part of the first member limb and a surface of the pulley. The first member limb may extend from the first member body at rights angles to a principle axis (or a planar surface) of the first member body. For example, the first member body may comprise an outer surface and the first member limb may extend away from the outer surface at right-angles to the outer surface.

The first member is rotatable within the pulley, and is rotatable so as to engage the first member limb with part of the pulley. For example, the first member may be rotatable so as to engage the first member limb with a spoke of the pulley. Alternatively, the first member may be rotatable so as to position the first member limb in an opening or cavity of the pulley, e.g. an opening or cavity defined by at least one spoke. The first member limb may restrict relative movement between the first member and the pulley, e.g. via engagement between the limb and at least part of the pulley, e.g. an element of the pulley.

The cavity may be at least partially defined by the first member limb. In this way the first member body may have a continuous profile such that the first member limb begins, or terminates, in a part of the body that defines the cavity. In this way, the first member body may be continuous.

The first member limb may extend from a peripheral surface of the first member body. The first member limb may have the configuration of a leg or arm extending from the edge of the body. For example, the first member body may comprise a peripheral edge and the first member limb may extend at or about that edge.

The first member limb may comprise a protrusion extending away from the first member limb and may define a slot delimited by the first member body, the first member limb, and the protrusion, wherein the slot may be for receipt of an element of the pulley. The protrusion may extend at right angles to the first member limb. In this way, the first member limb and protrusion may, combined, be an L-shaped extension away from the first member body and the slot may be the space defined therebetween.

After insertion of the first member into the pulley, the first member may be rotatable so as to position at least part of the pulley, e.g. a spoke thereof, within the slot. In this way the slot may be a retaining member of the first member and may be configured to retain the first member within the pulley. As stated above, the first member may be rotatable into a locking position in which it is retained in that position within the pulley - the first member may be rotatable to engage and lock with at least one spoke of the pulley within the slot of the first member.

The protrusion may comprise a lip extending away from the first member body, and the lip may be configured to, when the first member is inserted into a pulley, retain the first member within the pulley by a snap-fit arrangement, or any alternate fitting arrangement. The first member may be retained to the second member by bolts and/or screws joining both members.

When the first member is inserted into a pulley, rotation of the first member within the pulley in a first direction may cause at least part of the pulley to be received in, and engage, the slot, and engagement between the protrusion and the part of the pulley received in the slot may retain the first member within the pulley.

When the first member is inserted into a pulley and the second member is inserted into the cavity of the first member, at least part of the pulley may be located within the cavity. The cavity of the first member may therefore be configured to receive at least part of the second member and the pulley. For example, the cavity may be configured to receive a protrusion of the second member, e.g. a limb, and a part of the pulley (e.g. a spoke or part of an outer or inner hub thereof).

The first member may comprise a boss extending from a first member surface and the second member may comprise an opening in a second member surface, the opening may be configured to receive the boss, and, when the second member is inserted into the cavity of the first member, the boss may be received in the opening such that the boss and the second member surface form a single surface. The boss, and corresponding opening, may be centrally located within their respective surfaces. This enables a visual confirmation of correct connection between the first and second members, and insertion of the first member within the pulley. For example, the boss, received in the opening, may take the form of a central button. If the boss and opening are flush to create a single surface between the first and second members then an operator can infer, from visual inspection, that the installation of the insert in the pulley has been correct. If the parts are not flush, e.g. there are discontinuities in the first and second member surfaces, then the operator can know, from visual inspection, that the insert has not been installed correctly.

Once assembled, the first and second members may be secured together. For example, at least one clip may be provided on the first member, to the second member, for clippable engagement between the two members. In another example, at least one of the first and second member may comprise a threaded fastener, with the other member comprising a threaded opening for receiver of the fastener. Pins, washers/bolts, or an adhesive may also be used. Accordingly, at least one of the first and second members may comprise a securing means for securing the first and second members.

The first member and/or the second member may comprise a resiliently deformable material. The first member and/or the second member may comprise an acoustically absorbing material.

The insert may be a vibration camping insert. The insert may be a NVH reducing insert. Accordingly, in one example, the insert may be made of a NVH damping, or absorbing, material. E.g. the first and/or second member may comprise such a material.

As stated above, the insert may be a cover for the pulley.

The insert, or cover, may be connectable to a pulley, e.g. connected to an outer surface of a pulley.

At least one, or both, of the first member and the second member may be integrally moulded.

According to a further arrangement there may be provided a pulley comprising the insert as described above; and an inner hub configured to connect to a crankshaft, an outer hub, and at least one spoke joining the inner hub to the outer hub; wherein, the first member is insertable into the pulley such that the first member is rotatable within the pulley such that the slot may be rotated into engagement with the at least one spoke, and wherein engagement between the at least one spoke and at least one of the first member body, the first member limb, and the protrusion retains the first member within the pulley.

For example, there may be provided a FEAD pulley comprising an inner hub configured to connect to a rotatable shaft, e.g. there may be provided a crankshaft vibration damper comprising an inner hub configured to connect to a crankshaft. The FEAD pulley or crankshaft vibration damper may comprise an outer hub and at least one spoke joining the inner hub and the outer hub as above. The pulley may be a crankshaft vibration damper having an opening for receipt of the vibration damping insert as above.

According to a further arrangement there may be provided a pulley comprising: the insert as described above; and an inner hub configured to connect to a crankshaft, an outer hub, and at least one spoke joining the inner hub to the outer hub; wherein, when the first member is inserted into a pulley and the second member is inserted into the cavity of the first member, at least part of the at least one spoke is received into the cavity such that the second member is located in between the at least one spoke and the first member.

According to a further arrangement there may be provided a method of inserting the vibration damper insert as described above into a pulley, the method comprising the steps of: inserting the first member into the pulley; inserting the second member into the pulley such that at least part of the second member is received into the cavity of the first member.

Additionally it is provided a method as defined in claim 14.

Accordingly there is provided a pulley insert, comprising two pieces. The two-piece composition can function to reduce insertion forces compared to interference fit designs and provide positive retention of the insert within the pulley. For example, the first member is insertable into a pulley with clearance and therefore high insertion loads are reduced. The first member is rotatable to position at least one limb behind a spoke of the pulley. The second member may then be inserted into, or about, the first member to prevent it from rotating. Therefore, assembly of the insert can be accomplished without the need to overcome high forces. The risk of material tearing, e.g. due to loads on thinner components of the insert, is also reduced.

### Brief Description of Drawings

For a better understanding of the present invention, and to illustrate how it may be put into effect, reference will now be made, by way of example only, to the accompanying drawings in which:
Figs. 1A and 1B are, respectively, front and rear perspective views of an example vibration damper insert;
Figs. 2A and 2B are, respectively, front and rear perspective views of the vibration damper insert of Figs. 1A and 1B;
Figs. 3A and 3B are, respectively, front and rear perspective views of the vibration damper insert of Figs. 1A and 1B during insertion into a FEAD pulley; and
Fig. 4 is a perspective view of the vibration damper insert of Figs. 1A and 1B inserted into a FEAD pulley.

### Detailed Description

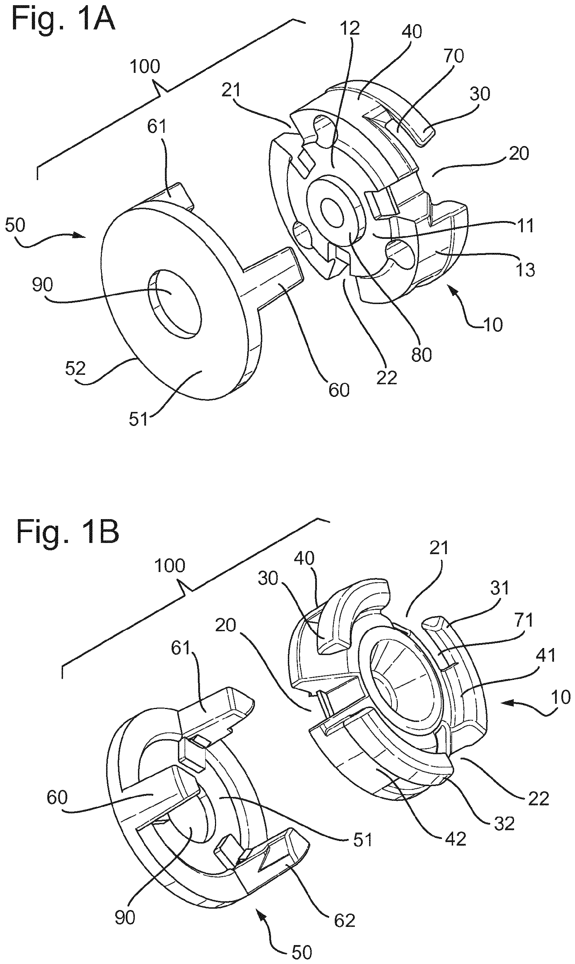

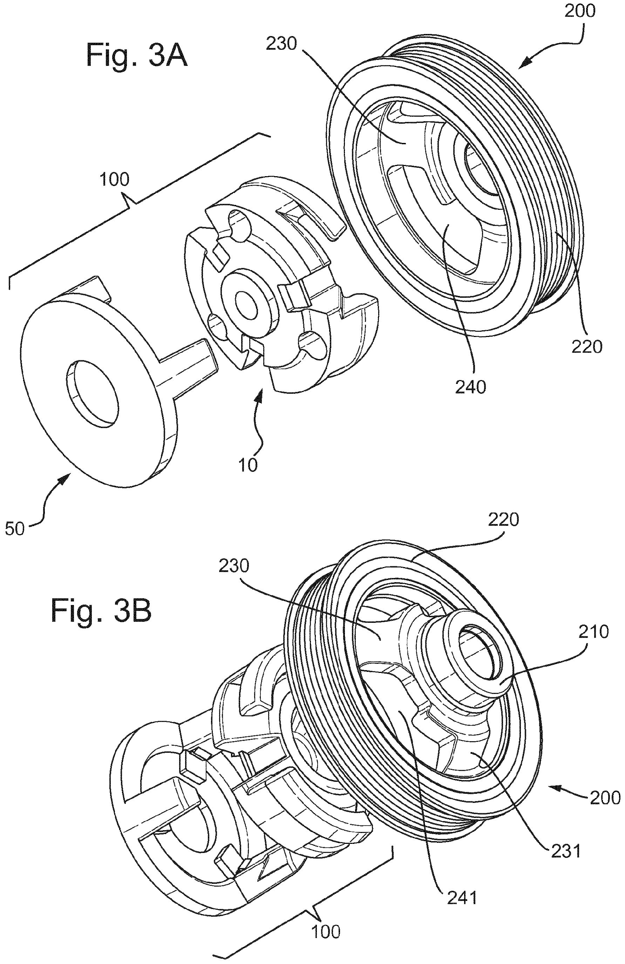

Figs. 1A and 1B show a vibration damper insert 100, denoted as insert, comprising a first member 10 and a second member 50. As will be described with reference to Figs. 3-4, the first member 10 is insertable into a pulley (not shown in Figs. 1-2 but shown in Figs. 3-4)-for example, a pulley of an internal combustion engine or an electric motor - such that the first member 10 is rotatable within the pulley. In one example the first member 10 is insertable into a FEAD pulley (for example an AC compressor pulley, an alternator pulley, a water pump pulley, a crankshaft pulley, a power steering pump pulley etc.)The first member 10 comprises a cavity 20 for receipt of the second member 50. As will be described below, when the first member 10 is inserted into a FEAD pulley and the second member 50 is inserted into the cavity 20 of the first member, the second member 50 prevents rotation of the first member 10 relative to the FEAD pulley.

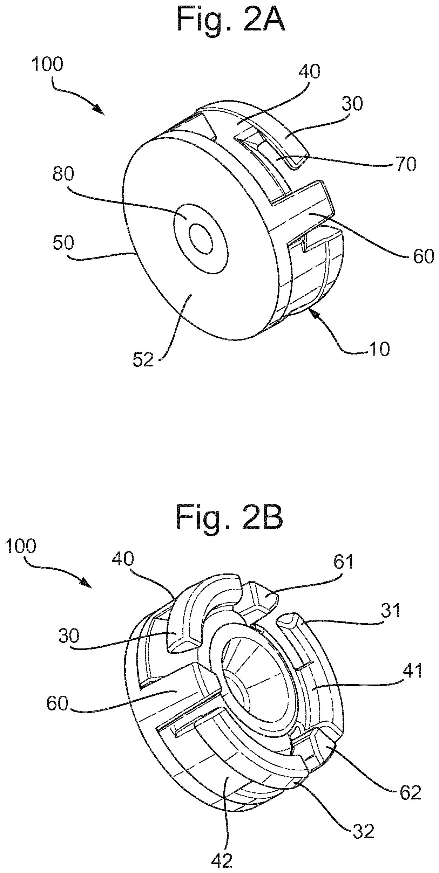

The second member 50 comprises a second member limb 60. Second member limb 60 is insertable into the cavity 20 (as is shown in Figs. 2A and 2B) such that, when the first member 10 is inserted into a FEAD pulley and the second member 50 is inserted into the cavity 20 of the first member 10, the second member limb 60 is inserted into the cavity 20. Rotation of the first member 10 relative to another article, e.g. a FEAD pulley, may be prevented by engagement between the first member 10 and second member 50, specifically engagement between the first member 10 and the second member limb 60.

The second member 50 comprises a second member body 51 defining a second member surface 52.The second member limb 60 protrudes away from the second member body 51 and second member surface 52. The second member limb 60 may be approximately at right angles to the second member surface 52.

As is shown in Figs. 1A and 1B the first member 10 comprises a first member body 11 and the cavity 20 is a gap in the first member body 11. That is, the first member body 11 is a solid object and the cavity 20 represents a hole, or discontinuity, in the surface of the first member body 11. The body 11 comprises a first member surface 12 that, for illustrative purposes, may be considered to be an upper surface of the body 11 and hence an upper surface of the first member 10. The body 11 comprises a lateral surface 13 that may be a surface of the body 11 located at approximately right angles to the upper surface 12.

The cavity 20 may be provided at any location in the first member body 11. For example, the cavity 20 may be a hole, groove, opening, slot or recess etc. in the first member surface 12 or lateral surface 13. In this way, the cavity 20 may represent a discontinuity in the first member body 11. There also may be any number of features like cavity 20.

The first member 10 comprises a first member limb 40. The first member limb 40 is a limb protruding away, and extends, from the lateral surface 13 of, the body 11 of the first member 10. The cavity 20 is at least partially defined by the first member limb 40.

The cavity 20, in one example, is a space defined by the first member limb 40 and the body 11. The first member limb 40 may be part of the lateral surface 13 of the first member body 11. For example, the first member limb 40 may be a protrusion away from the lateral surface 13, or the upper surface 12. The first member limb 40 may protrude at right-angles away from the upper surface 12 of the body 11.

The first member limb 40 comprises a protrusion 30 that extends away from the first member limb 40. The protrusion 30 away from the first member limb 40 defines a slot 70. Slot 70 is delimited by at least one of the first member body 11, the first member limb 40, and the protrusion 30. As shown in Fig. 1, the protrusion 30 is at right angles to the first member limb 40.

The cavity 20 and the slot 70 may be continuous, in that they may be one continuous space, e.g. a gap, in the first member body 11. The slot 70 may be delimited or defined by the first member limb 40 and the protrusion 30.

As will be described below, the slot 70 is for receipt of at least part of a FEAD pulley.

The first member 10 comprises a boss 80. The boss 80 is provided in the upper surface 12 of the body 11 of the first member 10. The boss 80 extends away from the upper surface 12 of the body 11 of the first member 10. The second member 50 comprises an opening 90 for receipt of the boss 80. Opening 90 is an opening in the second member surface 52. As will be described below, when the second member 50 is inserted into the cavity 20 of the first member 10, the boss 80 is received in the opening 90 such that the second member surface 52 and the boss 80 form a single surface. The features 80 and 90 may be used to attache 10 and 50 together using a bolt or interference fit feature.

It will therefore be appreciated that the present invention provides a two-component insert 100, formed of first and second members 10, 50. The first and second members 10, 50 are connected together to form the combined insert 100.

As is shown in Figs. 1A and 1B, the first member limb 40 is a first limb 40 and the first member 10 comprises second and third limbs 41, 42; the cavity 20 is a first cavity 20 and the first member 10 comprises second and third cavities 21, 22; the second member limb 60 is a first limb 60 and the second member 50 comprises second and third limbs 62, 63; the protrusion 30 is a first protrusion 30 and the second and third member limbs 41, 42 comprising second and third protrusions 31, 32, respectively; and the slot 70 is a first slot, the second and third protrusions 31, 32 defining second and third slots 71, 72, respectively.

As will be appreciated, and as will be discussed below, when the second member 50 is inserted into the first member 10, the first member first, second and third limbs 40, 41, 42 are respectively received in first, second and third cavities 20, 21, 22.

However, the skilled person will appreciate that the invention is in no way limited by the example illustrated in the figures - this example being shown only to illustrate an application of the principles of the invention. Accordingly, a first member with any number of protruding limbs, protrusions, cavities etc. is within the scope of this disclosure.

Figs. 2A and 2B depict the two-piece insert 100 with the second member 50 is received in, or inserted into, the first member 10. It will be appreciated that this is the configuration of the insert 100 when the insert 100 is received (i.e. assembled) in a FEAD pulley (not shown in Fig. 2).

Figs. 2A and 2B show that, when the second member 50 is inserted into the cavity 20 of the first member 10, the second member first, second and third limbs, 60, 61, 62, are inserted into the first, second and third cavities 20, 21, 22 respectively.

Figs. 2A and 2B also show that, when the second member 50 is inserted into the cavity 20 of the first member 10, the boss 80 is received in the opening 90 such that the boss 80 and the second member surface 52 form a single surface. In this way, correct insertion (or indeed connection) of the second member 50 into the first member 10 may be visually confirmed from a flush, continuous, interface between the second member surface 52 and the boss 80.

Figs. 3A and 3B show the process of inserting the insert 100 into a pulley 200. The pulley 200, in one example, may be a pulley attached to an internal combustion engine or electric motor. In one example, the pulley 200 is a FEAD pulley. In one example the pulley 200 may be an AC compressor pulley, water pump pulley, crankshaft pulley (e.g. a crankshaft vibration damper), alternator pulley, or a power steering pump pulley.

The pulley 200 comprises an inner hub 210 and an outer hub 220. A spoke 230 connects the inner hub 210 to the outer hub 220. As is depicted in Figs. 3A and 3B, the spoke 230 is a first spoke and the pulley 200 comprises a further spoke, second spoke 231, connecting the inner hub 210 to the outer hub 220. The pulley 200 may comprise a third spoke (not shown in Figs. 3A and 3B) connecting the inner and outer hubs 210, 220.

It will be appreciated from Figs. 3A and 3B that, to insert the insert 100 into the pulley 200, the first member 10 is inserted into the pulley 200. The first member insert 10 may initially be rotatable within the pulley 200. The first member insert 10 may then be rotated, with reference to the specific configuration shown in Figs. 3A, in a clockwise direction relative to the pulley 200 (as shown in Fig. 3A) such that at least one spoke 230, 231 is received in at least one slot 70, 71, 72 of the first member insert 10. For example, the first spoke 230 may be received in the first slot 70. When at least one spoke 230, 231 is received in at least one slot 70, 71, 72 of the first member 10 the at least one spoke will engage the first member body 11 and/or at least one of the first member limb and protrusion that define the slot. For example the first member 10 may be inserted within the pulley 200 and rotated such that the first spoke 230 is received in the first slot 70 and engages at least one of the first member body 11, the first member limb 40 and the first protrusion 30. This engagement may retain the first member 10 within the pulley 200.

It will be appreciated that the structure of the pulley 200, having at least one spoke connecting inner and outer hubs, naturally defines circumferential openings or spaces of the damper 200 between two sides of a single spoke, or between spokes. Hereafter, these spaces will be referred to as "openings" within/of the pulley 200, or "pulley openings". Two such openings are visible in the perspective views depicted in Figs. 3A and 3B, respectively,

It will be appreciated therefore that the first member 10 is inserted into at least one opening of the pulley 200.

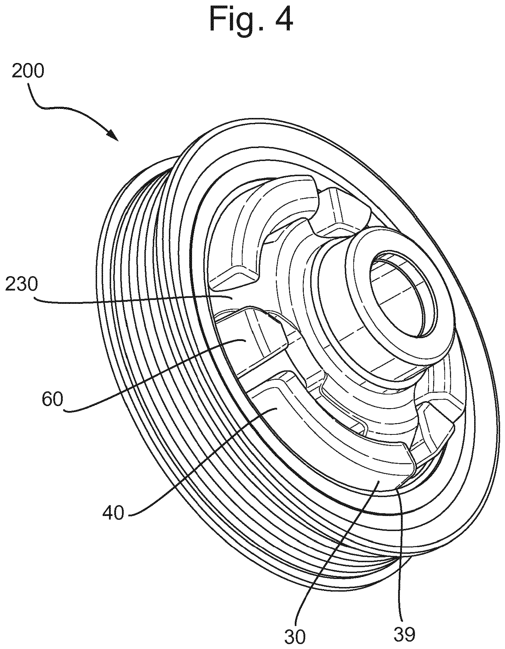

In a subsequent step, the second member 50 may be inserted into the first member 10. Specifically, the second member 50 maybe inserted into the cavity 20 of the first member 10. More specifically, the second member limb 60 may be inserted into the cavity 20 of the first member 10. As will be appreciated from Figs. 3A and 3B, the second member limb 60 is inserted into the pulley opening. This is shown in Fig. 4. More specifically, the first member 10 is inserted into the pulley opening and, thereafter, the second member limb 60 is inserted into the remaining, unoccupied, space of the pulley opening. Hence, the openings between the spokes of the pulley 200 are, when the insert 100 is inserted into the pulley, occupied by the first member 10 and the second member limb 60, e.g. the first member limb 41 and the second member limb 60.

Referring to Fig. 4 the assembled pulley 200 and insert 100 is shown. Fig. 4 shows that, when insert 100 is inserted into the pulley 200, the first and second members 10, 50 are received in a pulley opening of the pulley 200. Specifically, second member limb 60 and first member limb 40 are received in the opening such that the second member limb 60 is located between a spoke 230 of the pulley 200 and the first member limb 40. In one example, the insert 100 may be a crankshaft vibration damper insert and the pulley 200 may be a crankshaft vibration damper.

The protrusion 30 of the first member 10 comprises a lip 39 such that when the first member 10 is inserted into the pulley 200, as is shown in Fig. 4, a snap-fit arrangement retains the first member 10 (and therefore the insert 100) within the pulley 200. In other words, the lip 39 extends over part of the outer hub 220 of the pulley 200 to retain the first member 10 therein. The first member 10 and/or the second member 50 may comprise a resiliently deformable material. The first member 10 and/or the second member 50 may comprise an acoustically absorbing material.

While the invention has been illustrated and described in detail in the drawings and foregoing description, such illustration and description are to be considered illustrative or exemplary. In the claims, the word "comprising" does not exclude other elements or steps, and the indefinite article "a" or "an" does not exclude a plurality. Any reference signs in the claims should not be construed as limiting the scope, which is defined by the appended claims.

## Claims

1. A front end accessory drive pulley (200), denoted as FEAD pulley, comprising an insert (100), the insert comprising:
a first member (10) insertable into the FEAD pulley such that the first member (10) is rotatable within the FEAD pulley, the first member (10) comprising:
a cavity (20, 21, 22) for receipt of a second member (50),
a first member body (11), and
a first member limb (40),
the first member (10) being rotatable within the FEAD pulley so as to engage the first member limb (40) with a part (230, 231) of the FEAD pulley; and
a second member (50) insertable into the cavity (20, 21, 22) of the first member (10) and configured such that, when the first member (10) is inserted into the FEAD pulley and rotated so as to engage the part (230, 231) of the FEAD pulley and when the second member (50) is inserted into the cavity (20, 21, 22) of the first member (10) the second member (50) prevents rotation of the first member (10) relative to the FEAD pulley.

2. The FEAD pulley of claim 1 wherein the second member (50) comprises a second member limb (60) insertable within the cavity (20, 21, 22), such that, when the first member (10) is inserted into the FEAD pulley and the second member (50) is inserted into the cavity (20, 21, 22) of the first member (10), the second member limb (60) is inserted into the cavity (20, 21, 22) of the first member (10), and wherein engagement between the first member (10) and second member limb (60) prevents rotation of the first member (10) relative to the FEAD pulley.

3. The FEAD pulley of claim 1 wherein the cavity (20, 21, 22) is a gap (20, 21, 22) in the first member body (11).

4. The FEAD pulley of claim 1 wherein the part (230, 231) of the FEAD pulley comprises a spoke (230, 231).

5. The FEAD pulley of claim 1 wherein the cavity (20, 21, 22) is at least partially defined by the first member limb (40).

6. The FEAD pulley of claim 1 wherein the first member limb (40) extends from a peripheral surface of the first member body (11).

7. The FEAD pulley of claim 1 wherein the first member limb (40) comprises a protrusion (30) extending away from the first member limb (40) and defining a slot (70, 71, 72) delimited by the first member body (11), the first member limb (40), and the protrusion (30), wherein the slot (70, 71, 72) is for receipt of the part (230, 231) of the FEAD pulley.

8. The FEAD pulley of claim 7 wherein the protrusion (30) comprises a lip (39) extending away from the first member body (11), the lip (39) being configured to, when the first member (10) is inserted into the FEAD pulley, retain the first member (10) within the FEAD pulley by a snap-fit arrangement.

9. The FEAD pulley of claim 7 wherein, when the first member (10) is inserted into the FEAD pulley, rotation of the first member (10) within the FEAD pulley in a first direction causes at least part of the FEAD pulley to be received in, and engage, the slot (70, 71, 72), wherein engagement between the protrusion (30) and the part (230, 231) of the FEAD pulley received in the slot (70, 71 72) retains the first member (10) within the FEAD pulley.

10. The FEAD pulley of claim 1 wherein, when the first member (10) is inserted into the FEAD pulley and the second member (50) is inserted into the cavity (20, 21, 22) of the first member (10), at least part of the FEAD pulley is located within the cavity (20, 21, 22).

11. The FEAD pulley of claim 1 wherein the first member (10) comprises a boss (80) extending from a first member surface (12) and the second member (50) comprises an opening (90) in a second member surface (52), the opening (90) being configured to receive the boss (80), and wherein, when the second member (50) is inserted into the cavity (20, 21, 22) of the first member (10), the boss (80) is received in the opening (90) such that the boss (80) and the second member surface (52) form a single surface.

12. The FEAD pulley of claim 7 comprising:
an inner hub (210), an outer hub (220), and at least one spoke (230, 231) joining the inner hub (210) to the outer hub (220),
wherein, the first member (10) is insertable into the FEAD pulley such that the first member (10) is rotatable within the FEAD pulley such that the slot (70, 71, 72) may be rotated into engagement with the at least one spoke (230, 231), and wherein engagement between the at least one spoke (230, 231) and at least one of the first member body (11), the first member limb (40), and the protrusion (30) retains the first member (10) within the FEAD pulley.

13. The FEAD pulley of claim 1 comprising:
an inner hub (210), an outer hub (220), and at least one spoke (230, 231) joining the inner hub (210) to the outer hub (220),
wherein, when the first member (10) is inserted into the FEAD pulley and the second member (50) is inserted into the cavity (20, 21, 22) of the first member (10), at least part of one spoke (230, 231) is received into the cavity (20, 21, 22) such that the second member is located in between the spoke (230, 231) and the first member (10).

14. A method comprising the steps of:
providing the FEAD pulley (200) according to claim 1;
inserting the first member (10) of the insert (100) into the FEAD pulley (200) such that the first member (10) is rotatable within the FEAD pulley so as to engage the first member limb (40) with the part (230, 231) of the FEAD pulley; and
inserting a second member (50) into the cavity (20, 21, 22) of the first member (10) such that rotation of the first member (10) relative to the FEAD pulley is prevented.

## Patentansprüche

1. Frontend-Zubehör-Antriebsriemenscheibe (200), bezeichnet als FEAD-Riemenscheibe, umfassend einen Einsatz (100), der Einsatz umfassend:
ein erstes Element (10), das in die FEAD-Riemenscheibe eingesetzt werden kann, sodass das erste Element (10) innerhalb der FEAD-Riemenscheibe drehbar ist, das erste Element (10) umfassend:
einen Hohlraum (20, 21, 22) zum Aufnehmen eines zweiten Elements (50), einen ersten Elementkörper (11) und
ein erstes Elementglied (40),
wobei das erste Element (10) innerhalb der FEAD-Riemenscheibe drehbar ist, um das erste Elementglied (40) mit einem Teil (230, 231) der FEAD-Riemenscheibe in Eingriff zu bringen; und
ein zweites Element (50), das in den Hohlraum (20, 21, 22) des ersten Elements (10) einführbar und konfiguriert ist, sodass wenn das erste Element (10) in die FEAD-Riemenscheibe eingeführt und gedreht wird, um das Teil (230, 231) der FEAD-Riemenscheibe einzugreifen, und wenn das zweite Element (50) in den Hohlraum (20, 21, 22) des ersten Elements (10) eingeführt ist, das zweite Element (50) eine Drehung des ersten Elements (10) in Bezug auf die FEAD-Riemenscheibe verhindert.

2. FEAD-Riemenscheibe gemäß Anspruch 1, wobei das zweite Element (50) ein zweites Elementglied (60) umfasst, das in den Hohlraum (20, 21, 22) eingeführt werden kann, sodass wenn das erste Glied (10) in die FEAD-Riemenscheibe eingeführt ist und das zweite Glied (50) in den Hohlraum (20, 21, 22) des ersten Glieds (10) eingeführt wird, das zweite Elementglied (60) in den Hohlraum (20, 21, 22) des ersten Glieds (10) eingeführt wird, und wobei ein Eingriff zwischen dem ersten Glied (10) und dem zweiten Elementglied (60) eine Drehung des ersten Glieds (10) in Bezug auf die FEAD-Riemenscheibe verhindert.

3. FEAD-Riemenscheibe gemäß Anspruch 1, wobei der Hohlraum (20, 21, 22) ein Spalt (20, 21, 22) in dem ersten Elementkörper (11) ist.

4. FEAD-Riemenscheibe gemäß Anspruch 1, wobei das Teil (230, 231) der FEAD-Riemenscheibe eine Speiche (230, 231) umfasst.

5. FEAD-Riemenscheibe gemäß Anspruch 1, wobei der Hohlraum (20, 21, 22) mindestens teilweise durch das erste Elementglied (40) begrenzt ist.

6. FEAD-Riemenscheibe gemäß Anspruch 1, wobei sich das erste Elementglied (40) von einer Umfangsfläche des ersten Elementkörpers (11) erstreckt.

7. FEAD-Riemenscheibe gemäß Anspruch 1, wobei das erste Elementglied (40) einen Vorsprung (30) umfasst, der sich von dem ersten Elementglied (40) erstreckt und einen Schlitz (70, 71, 72) definiert, der durch den ersten Elementkörper (11), das erste Elementglied (40) und den Vorsprung (30) begrenzt ist, wobei der Schlitz (70, 71, 72) zum Aufnehmen des Teils (230, 231) der FEAD-Riemenscheibe ist.

8. FEAD-Riemenscheibe gemäß Anspruch 7, wobei der Vorsprung (30) eine Lippe (39) umfasst, die sich weg von dem Körper (11) des ersten Elements erstreckt, wobei die Lippe (39) konfiguriert ist, um, wenn das erste Element (10) in die FEAD-Riemenscheibe eingeführt ist, das erste Element (10) durch eine Rastverschlussanordnung innerhalb der FEAD-Riemenscheibe zu halten.

9. FEAD-Riemenscheibe gemäß Anspruch 7, wobei, wenn das erste Element (10) in die FEAD-Riemenscheibe eingesetzt ist, eine Drehung des ersten Elements (10) innerhalb der FEAD-Riemenscheibe in einer ersten Richtung bewirkt, dass mindestens ein Teil der FEAD-Riemenscheibe in dem Schlitz (70, 71, 72) aufgenommen wird und in diesen eingreift, wobei ein Eingriff zwischen dem Vorsprung (30) und dem Teil (230, 231) der FEAD-Riemenscheibe, der in dem Schlitz (70, 71, 72) aufgenommen ist, das erste Element (10) innerhalb der FEAD-Riemenscheibe hält.

10. FEAD-Riemenscheibe gemäß Anspruch 1, wobei, wenn das erste Element (10) in die FEAD-Riemenscheibe eingesetzt ist und das zweite Element (50) in den Hohlraum (20, 21, 22) des ersten Elements (10) eingesetzt ist, sich mindestens ein Teil der FEAD-Riemenscheibe innerhalb des Hohlraums (20, 21, 22) befindet.

11. FEAD-Riemenscheibe gemäß Anspruch 1, wobei das erste Element (10) einen Vorsprung (80) umfasst, der sich von einer ersten Elementoberfläche (12) erstreckt, und das zweite Element (50) eine Öffnung (90) in einer zweiten Elementoberfläche (52) umfasst, wobei die Öffnung (90) konfiguriert ist, um den Vorsprung (80) aufzunehmen, und wobei, wenn das zweite Element (50) in den Hohlraum (20, 21, 22) des ersten Elements (10) eingeführt ist, der Vorsprung (80) in der Öffnung (90) aufgenommen ist, sodass der Vorsprung (80) und die zweite Elementoberfläche (52) eine einzige Oberfläche bilden.

12. FEAD-Riemenscheibe gemäß Anspruch 7, umfassend:
eine innere Nabe (210), eine äußere Nabe (220) und mindestens eine Speiche (230, 231), die die innere Nabe (210) mit der äußeren Nabe (220) verbindet,
wobei das erste Element (10) in die FEAD-Riemenscheibe eingeführt werden kann, sodass das erste Element (10) innerhalb der FEAD-Riemenscheibe drehbar ist, sodass der Schlitz (70, 71, 72) in Eingriff mit der mindestens einen Speiche (230, 231) gedreht werden kann, und wobei der Eingriff zwischen der mindestens einen Speiche (230, 231) und mindestens einem von dem Elementkörper (11), dem ersten Elementglied (40) und dem Vorsprung (30) das erste Element (10) innerhalb der FEAD-Riemenscheibe hält.

13. FEAD-Riemenscheibe gemäß Anspruch 1, umfassend:
eine innere Nabe (210), eine äußere Nabe (220) und mindestens eine Speiche (230, 231), die die innere Nabe (210) mit der äußeren Nabe (220) verbindet,
wobei, wenn das erste Element (10) in die FEAD-Riemenscheibe eingesetzt ist und das zweite Element (50) in den Hohlraum (20, 21, 22) des ersten Elements (10) eingesetzt ist, mindestens ein Teil einer Speiche (230, 231) in den Hohlraum (20, 21, 22) aufgenommen ist, sodass sich das zweite Element zwischen der Speiche (230, 231) und dem ersten Element (10) befindet.

14. Verfahren, umfassend die folgenden Schritte:
Bereitstellen der FEAD-Riemenscheibe (200) gemäß Anspruch 1;
Einsetzen des ersten Elements (10) des Einsatzes (100) in die FEAD-Riemenscheibe (200), sodass das erste Element (10) innerhalb der FEAD-Riemenscheibe drehbar ist, um das erste Elementglied (40) mit dem Teil (230, 231) der FEAD-Riemenscheibe einzugreifen; und
Einsetzen eines zweiten Elements (50) in den Hohlraum (20, 21, 22) des ersten Elements (10), sodass eine Drehung des ersten Elements (10) in Bezug auf die FEAD-Riemenscheibe verhindert ist.

## Revendications

1. Une poulie d'entraînement d'accessoires d'extrémité avant (200), indiquée comme poulie FEAD, comprenant un insert (100), l'insert comprenant :
un premier élément (10) insérable dans la poulie FEAD de telle sorte que le premier élément (10) puisse tourner à l'intérieur de la poulie FEAD, le premier élément (10) comprenant :
une cavité (20, 21, 22) pour recevoir un deuxième élément (50),
un corps du premier élément (11), et
un membre du premier élément (40),
le premier élément (10) pouvant tourner à l'intérieur de la poulie FEAD de manière à engager le membre du premier élément (40) avec une partie (230, 231) de la poulie FEAD ; et
un deuxième élément (50) insérable dans la cavité (20, 21, 22) du premier élément (10) et configuré de telle sorte que, lorsque le premier élément (10) est inséré dans la poulie FEAD et tourné de manière à engager la partie (230, 231) de la poulie FEAD et lorsque le deuxième élément (50) est inséré dans la cavité (20, 21, 22) du premier élément (10), le deuxième élément (50) empêche la rotation du premier élément (10) par rapport à la poulie FEAD.

2. La poulie FEAD selon la revendication 1, dans laquelle le deuxième élément (50) comprend un membre du deuxième élément (60) insérable dans la cavité (20, 21, 22), de telle sorte que, lorsque le premier élément (10) est inséré dans la poulie FEAD et que le deuxième élément (50) est inséré dans la cavité (20, 21, 22) du premier élément (10), le membre du deuxième élément (60) est inséré dans la cavité (20, 21, 22) du premier élément (10), et dans lequel l'engagement entre le premier élément (10) et le membre du deuxième élément (60) empêche la rotation du premier élément (10) par rapport à la poulie FEAD.

3. La poulie FEAD selon la revendication 1, dans laquelle la cavité (20, 21, 22) est un espace (20, 21, 22) dans le corps du premier élément (11).

4. La poulie FEAD selon la revendication 1, dans laquelle la partie (230, 231) de la poulie FEAD comprend un rayon (230, 231).

5. La poulie FEAD selon la revendication 1, dans laquelle la cavité (20, 21, 22) est au moins partiellement définie par le membre du premier élément (40).

6. La poulie FEAD selon la revendication 1, dans laquelle le membre du premier élément (40) s'étend depuis une surface périphérique du corps du premier élément (11).

7. La poulie FEAD selon la revendication 1, dans laquelle le membre du premier élément (40) comprend une saillie (30) s'étendant à l'écart du membre du premier élément (40) et définissant une fente (70, 71, 72) délimitée par le corps du premier élément (11), le membre du premier élément (40) et la saillie (30), dans laquelle la fente (70, 71, 72) est destinée à recevoir la partie (230, 231) de la poulie FEAD.

8. La poulie FEAD selon la revendication 7, dans laquelle la saillie (30) comprend une lèvre (39) s'étendant à l'écart du corps du premier élément (11), la lèvre (39) étant configurée pour, lorsque le premier élément (10) est inséré dans la poulie FEAD, retenir le premier élément (10) à l'intérieur de la poulie FEAD par un agencement d'encliquetage.

9. La poulie FEAD selon la revendication 7, dans laquelle, lorsque le premier élément (10) est inséré dans la poulie FEAD, la rotation du premier élément (10) à l'intérieur de la poulie FEAD dans une première direction fait qu'au moins une partie de la poulie FEAD est reçue dans, et engage, la fente (70, 71, 72), dans laquelle l'engagement entre la saillie (30) et la partie (230, 231) de la poulie FEAD reçue dans la fente (70, 71, 72) retient le premier élément (10) à l'intérieur de la poulie FEAD.

10. La poulie FEAD selon la revendication 1 dans laquelle, lorsque le premier élément (10) est inséré dans la poulie FEAD et le deuxième élément (50) est inséré dans la cavité (20, 21, 22) du premier élément (10), au moins une partie de la poulie FEAD est située dans la cavité (20, 21, 22).

11. La poulie FEAD selon la revendication 1, dans laquelle le premier élément (10) comprend un bossage (80) s'étendant depuis une surface du premier élément (12) et le deuxième élément (50) comprend une ouverture (90) dans une surface du deuxième élément (52), l'ouverture (90) étant configurée pour recevoir le bossage (80), et dans lequel, lorsque le deuxième élément (50) est inséré dans la cavité (20, 21, 22) du premier élément (10), le bossage (80) est reçu dans l'ouverture (90) de telle sorte que le bossage (80) et la surface du deuxième élément (52) forment une surface unique.

12. La poulie FEAD selon la revendication 7 comprenant :
un moyeu intérieur (210), un moyeu extérieur (220), et au moins un rayon (230, 231) reliant le moyeu intérieur (210) au moyeu extérieur (220),
dans laquelle le premier élément (10) peut être inséré dans la poulie FEAD de telle sorte que le premier élément (10) peut tourner à l'intérieur de la poulie FEAD de telle sorte que la fente (70, 71, 72) peut être tournée en engagement avec l'au moins un rayon (230, 231), et dans laquelle l'engagement entre l'au moins un rayon (230, 231) et au moins l'un du corps du premier élément (11), du membre du premier élément (40) et de la saillie (30) retient le premier élément (10) à l'intérieur de la poulie FEAD.

13. La poulie FEAD selon la revendication 1 comprenant :
un moyeu intérieur (210), un moyeu extérieur (220), et au moins un rayon (230, 231) reliant le moyeu intérieur (210) au moyeu extérieur (220),
dans laquelle, lorsque le premier élément (10) est inséré dans la poulie FEAD et le deuxième élément (50) est inséré dans la cavité (20, 21, 22) du premier élément (10), au moins une partie d'un rayon (230, 231) est reçue dans la cavité (20, 21, 22) de telle sorte que le deuxième élément est situé entre le rayon (230, 231) et le premier élément (10).

14. Un procédé comprenant les étapes consistant à :
fournir la poulie FEAD (200) selon la revendication 1 ;
insérer le premier élément (10) de l'insert (100) dans la poulie FEAD (200) de telle sorte que le premier élément (10) puisse tourner à l'intérieur de la poulie FEAD de manière à engager le membre du premier élément (40) avec la partie (230, 231) de la poulie FEAD ; et
insérer un deuxième élément (50) dans la cavité (20, 21, 22) du premier élément (10) de telle sorte que la rotation du premier élément (10) par rapport à la poulie FEAD soit empêchée.
